# EUROPÄISCHE PATENTANMELDUNG

(11) **EP 0 822 023 A1**
(43) Veröffentlichungstag der Anmeldung: **04.02.1998**
(21) Anmeldenummer: 97112003.5
(22) Anmeldetag: 15.07.1997
(51) Int. Cl.: B23D 61/18

(54) **Seilsäge für harte Stoffe**

(30) Priorität: 31.07.1996 AT 1371/96
(71) Anmelder: ETABLISSEMENT EUROLIGNA MASCHINEN AGGREGATE INDUSTRIEBEDARF, FL-9490 Vaduz (LI)
(72) Erfinder: Freithofnigg, Ingo, Dipl.Vw.Ing., 9022 Klagenfurt (AT); Dolp, Johann, 3375 Krummnussbaum (AT)
(74) Vertreter: Puchberger, Rolf, Dipl. Ing.

(57) **Zusammenfassung**

Die Erfindung betrifft eine Seilsäge für harte Stoffe, wie Stein oder Beton, wobei auf einem umlaufenden Seil Schneidelemente angeordnet sind, die nach außen einen Schneidkopf (6) und nach innen zur Führung und Kraftübertragung einen Fuß (7) aufweisen, der in einer Führungsschiene der Seilsäge geführt ist, wobei das Schneidelement eine aus Blech gebogene Seilhülse (10) umfaßt, die den Schneidkopf (6) und den Fuß (7) trägt, und der Fuß (7) durch zwei Flanken (15,16) der Seilhülse (10) gebildet ist, dadurch gekennzeichnet, daß die Seilhülsen (10) um das Seil (1) geschlossen und mit diesem fest verbunden sowie in einem Abstand voneinander angeordnet sind.

## Beschreibung

Die Erfindung betrifft eine Seilsäge für harte Stoffe, wie Stein oder Beton, wobei auf einem Seil Schneidelemente angeordnet sind, die nach außen einen Schneidkopf und nach innen zur Führung und Kraftübertragung einen Fuß aufweisen, der in einer Führungsschiene der Seilsäge geführt ist, wobei das Schneidelement eine aus Blech gebogene Seilhülse umfaßt, die den Schneidkopf und den Fuß tragen, und der Fuß durch zwei Flanken der Seilhülse gebildet ist.

Die Diamantseiltechnik ist zum Schneiden harter Stoffe, wie Stein oder Beton, schon lange bekannt. Auf einem Stahlseil sind Diamantperlen aufgezogen, oder Schneidelemente aus anderen harten Materialien, die entweder entlang des Seiles in gewissem Ausmaß beweglich und gegenseitig durch Federn abgestützt sind, oder die durch Kunststoffverguß auf dem Seil fixiert sind. Die Diamantperlen sind allseitig von gleicher Qualität hinsichtlich der abrasiven Fähigkeit. Das Seil muß sich bei der Arbeit um sich selbst drehen, damit die Diamantperlen möglichst gleichmäßig abgenutzt werden.

Seilsägen der gattungsbildenden Art sind z.B. durch die GB 725 721 A bekannt geworden. Allerdings bilden die dort geoffenbarten Schneidelemente keine Seilhülsen, sondern lediglich Klemmen, deren Halt auf dem Seil ungenügend ist. Daher ist es nötig, diese Klemmen dicht aneinanderliegend anzuordnen, sodaß sie sich gegenseitig abstützen. In der Praxis ist eine derartige Anordnung nicht durchführbar.

Die DE PS 846 821 zeigt eine Seilsäge mit zwei umlaufenden Seilen und aus Platten zusammengenieteten Schneidelementen. Diese Konstruktion ist nicht stabil genug, um den Anforderungen der Praxis gerecht zu werden.

Aus der FR 969 357 A ist eine Seilsäge bekannt, bei der auf dem Seil Schneidperlen aufgefädelt sind und getrennt davon Mitnehmerelemente vorgesehen sind, die mit dem Seil verbunden sind und die Mitnehmerfüße tragen. Zwischen den Mitnehmerelementen und der jeweils nachfolgenden Schneidperle sind Abstandsfedern vorgesehen. Diese Konstruktion ist teuer und störungsanfällig.

Die vorliegende Erfindung hat die Aufgabe, unter Vermeidung der Nachteile der bekannten Konstruktionen, die Diamantseiltechnik auf Sägen zu übertragen, wobei das Seil und die aufgesetzten Schneidelemente entlang einer Führungsschiene laufen, wie bei einer Kettensäge. Herkömmliche Diamantperlen und die zuvor beschriebenen Seilsägen nach dem Stand der Technik können für diesen Zweck nicht oder nur mit großen Nachteilen verwendet werden.

Die erfindungsgemäße Seilsäge ist dadurch gekennzeichnet, daß die Seilhülsen um das Seil geschlossen und mit diesem fest verbunden sowie in einem Abstand voneinander angeordnet sind.

Weitere vorteilhafte Merkmale der Erfindung sind der nachfolgenden Beschreibung, den Patentansprüchen und den Zeichnungen zu entnehmen.

In der Zeichnung ist die Erfindung in mehreren Ausführungsbeispielen schematisch dargestellt. Fig. 1 zeigt schematisch die geschnittene Seitenansicht einer solchen Seilsäge. Fig. 2 zeigt den Schnitt durch ein Ausführungsbeispiel eines Schneidelementes auf dem Seil. Die Fig. 3 und 4 zeigen in Schrägansicht zwei Ausführungsbeispiele für die Seilhülse. Die Fig. 5 bis 6 veranschaulichen verschiedene Ausbildungen des Schneidkopfes in Ansicht in Richtung des Seiles.

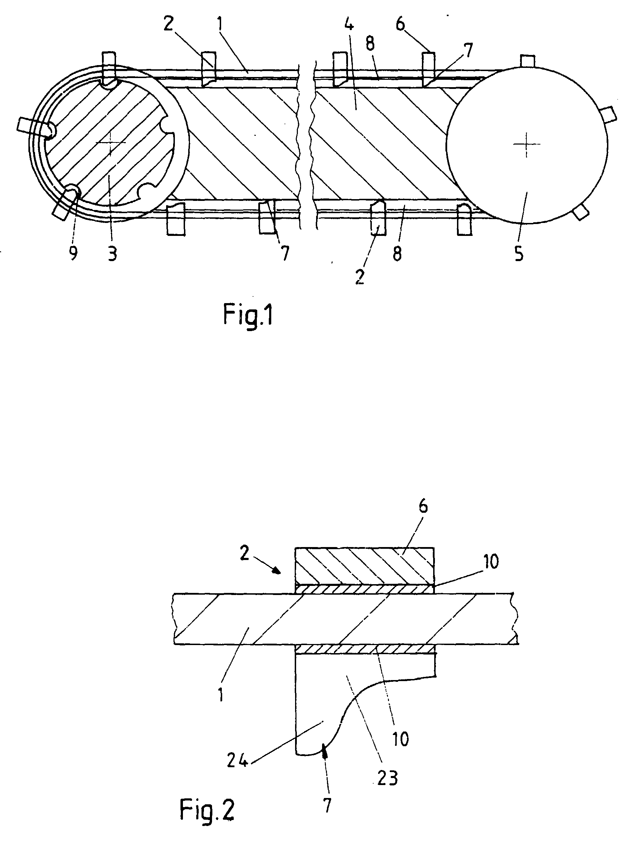

In Fig. 1 ist schematisch die erfindungsgemäße Seilsäge, teilweise der Länge nach geschnitten, dargestellt. Das Seil 1 mit den Schneidelementen 2 wird von einem Antriebsrad 3 angetrieben und läuft am anderen Ende der Führungsschiene 4 um ein Umlenkrad 5. Die Schneidelemente 2 weisen nach außen hin jeweils einen Schneidkopf 6 auf, der aus hartem Material besteht. Nach innen ragt jeweils ein Fuß 7, wobei die Füße einerseits in Führungsnuten 8 der Führungsschiene 4 geführt sind und andererseits in Vertiefungen 9 des Antriebsrades 3 eingreifen.

Fig. 2 zeigt in größerem Maßstab einen Längsschnitt durch ein Schneidelement entlang des Seiles 1. Das Schneidelement 2 besteht im wesentlichen aus der Seilhülse 10, die das Seil 1 fest umgibt und mit diesem verbunden ist, sowie dem Schneidkopf 6 und dem Fuß 7, dessen Form den jeweiligen Vertiefungen des Antriebsrades 3 angepaßt sein muß. Der Fuß umfaßt den Führungsabschnitt 23 und den Mitnehmerabschnitt 24.

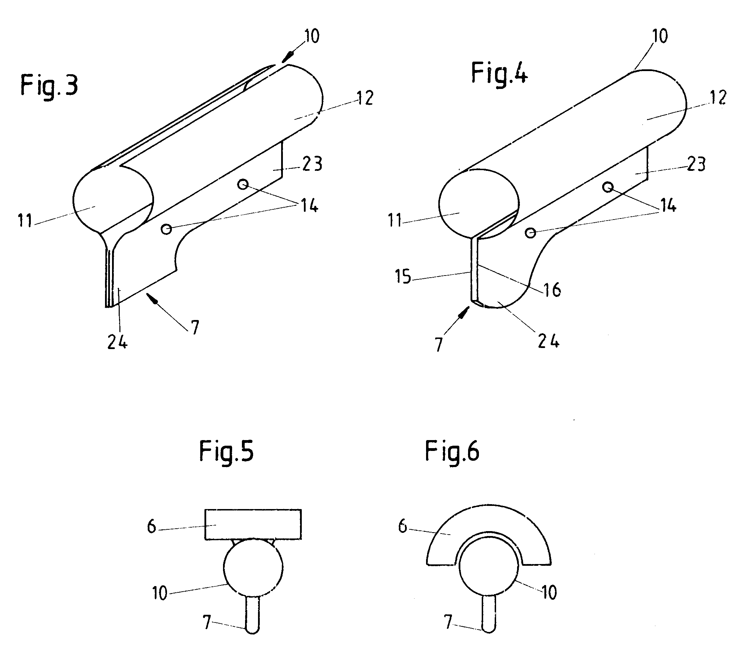

Wichtig für die vorliegende Erfindung ist es, daß das Schneidelement insgesamt so billig wie möglich herzustellen ist, daß die Montage auf dem Seil einfach und rasch erfolgen kann und daß auch Reparaturen möglich sind. Erfindungsgemäß ist die Seilhülse aus Blech gebogen und mit dem Seil befestigt. Gemäß Fig. 3 sind zwei Halbschalen 11, 12 vorgesehen, die mit dem Seil verklebt, verschweißt oder verlötet werden. Der Fuß 7 ist von unten an den Seilhülsen angesetzt und mit den Halbschalen einstückig.

Fig. 4 zeigt ein bevorzugtes Ausführungsbeispiel, bei dem die beiden Halbschalen und der Fuß einstückig aus einem Blechstück gepreßt und gebogen sind. Durch Nieten, Schrauben oder Punktschweißungen an den Befestigungspunkten 14 werden die Flanken 15,16 des Fußes zusammengepreßt und auf dem Seil fixiert. Zusätzlich kann die Seilhülse mit dem Seil verklebt, geschweißt oder verlötet werden.

Die Fig. 5 und 6 zeigen zwei Varianten für die Anordnung des Schneidkopfes auf den Seilhülsen, die gemäß den Fig. 3 oder 4 ausgebildet sein können.

In der Ausführung nach Fig. 5 ist der Schneidkopf 6 ein Plättchen und sitzt mittels Lot oder Verschweißung oben auf der Seilhülse 10, die innen das hier nicht dargestellte Seil aufnimmt.

Fig. 6 ist ein bevorzugtes Ausführungsbeispiel, wobei der Schneidkopf 6 als runde Halbschale oben auf der Seilhülse 10 aufgesetzt ist. Die Befestigung erfolgt am besten mittels Lot.

In allen zuvor gezeigten Ausführungsbeispielen haben die Füße 7 ein Profil, welches den Antrieb durch ein gezahntes Antriebsrad ermöglicht und eine gute Führung in der Führungsschiene gewährleistet. Das Profil kann nachträglich oder bereits vor der fertigen Ausbildung des Fußes geformt werden. Der Fuß umfaßt einen Führungsabschnitt 23, der über die Länge der Seilhülse 10 reicht, und davon erstreckt sich in dessen Verlängerung der Mitnehmerabschnitt 24, dessen Länge geringer als jene der Seilhülse ist. Die Befestigungspunkte 14 liegen im Bereich des Führungsabschnittes 23.

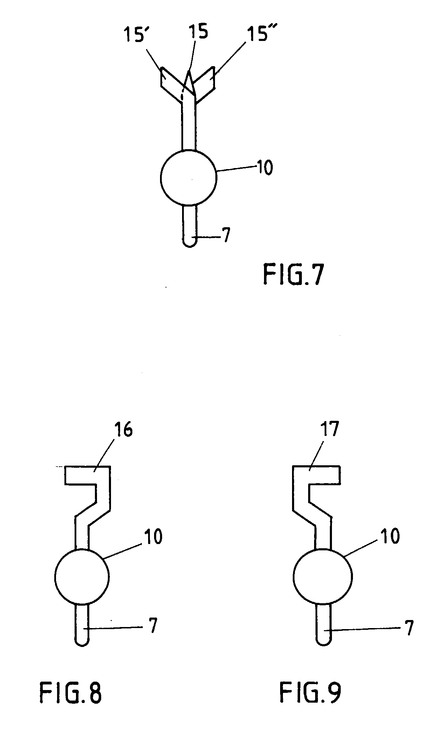

Die Figuren 7 bis 9 zeigen verschiedene vorteilhafte Ausbildungen des Schneidkopfes die an sich bekannt sind.

Nach Fig. 7 liegt ein Spitzzahn in den drei Varianten vor, nämlich mit geradem Zahn 15 und den geschränkten Zähnen 15' und 15''. Die drei Zahntypen können entweder an einer einzigen Seilhülse hintereinander angeordnet sein oder jeweils auf drei hintereinander liegenden Seilhülsen.

Die Fig. 8 und 9 dargestellten Hobelzähne 16,17 sind bevorzugt an jeweils hintereinander liegenden getrennten Seilhülsen angeordent, können aber ebenfalls auf jeder einzelnen Seilhülse gemeinsam befestigt sein. Die Spitzzähne und Hobelzähne können aus Stahl einstückig gefertigt sein, oder an den spanabtragenden Flächen und Kanten Plättchen aus Hartmaterial aufweisen, wie oben beschrieben ist.

Die verschiedenen dargestellten Varianten für Schneidkopf, Seilhülse und Fuß können jeweils den gestellten Anforderungen miteinander beliebig kombiniert werden.

Der Schneidkopf besteht bevorzugt aus Hartmaterialien wie Diamant-, Hartmetall-, Keramik- oder Stahlwerkstoff.

Hinsichtlich des verwendeten Seiles ist zu sagen, daß es neben der erforderlichen Zug- und Verschleißfestigkeit auch möglichst verwindungssteif sein soll, so daß ein Drehen des Seiles beim Arbeiten verhindert wird.

## Patentansprüche

1. Seilsäge für harte Stoffe, wie Stein oder Beton, wobei auf einem umlaufenden Seil Schneidelemente angeordnet sind, die nach außen einen Schneidkopf und nach innen zur Führung und Kraftübertragung einen Fuß aufweisen, der in einer Führungsschiene der Seilsäge geführt ist, wobei das Schneidelement eine aus Blech gebogene Seilhülse umfaßt, die den Schneidkopf und den Fuß trägt, und der Fuß durch zwei Flanken der Seilhülse gebildet ist, dadurch gekennzeichnet, daß die Seilhülsen (10) um das Seil (1) geschlossen und mit diesem fest verbunden sowie in einem Abstand voneinander angeordnet sind.

2. Seilsäge nach Anspruch 1, dadurch gekennzeichnet, daß die zwei Flanken (15,16) aneinanderliegend zum Fuß (7) verbunden sind, und daß der Fuß einen Führungsabschnitt (23), der sich über die Länge der Seilhülse erstreckt, und einen Mitnehmerabschnitt (24) aufweist, der sich vom Führungsabschnitt (23) in dessen Verlängerung erstreckt und eine geringere Länge aufweist als die Seilhülse.

3. Seilsäge nach Anspruch 2, dadurch gekennzeichnet, daß die Verbindung der den Fuß bildenden Flanken (15,16) mittels Vernietung oder Punktschweißen im Führungsabschnitt (23) gegeben ist.

4. Seilsäge nach Anspruch 1, 2 oder 3, dadurch gekennzeichnet, daß die Seilhülse und der Fuß aus zwei Halbschalen zusammengesetzt sind (Fig. 1).

5. Seilsäge nach Anspruch 1, 2 oder 3, dadurch gekennzeichnet, daß die Seilhülse und der Fuß aus einem Blechstück einstückig gepreßt und gebogen ist.

6. Seilsäge nach einem der Ansprüche 1 bis 5, dadurch gekennzeichnet, daß der Schneidkopf (6) plattenförmig ist und auf der Seilhülse aufgesetzt und mit dieser fest verbunden ist.

7. Seilsäge nach einem der Ansprüche 1 bis 5, dadurch gekennzeichnet, daß der Schneidkopf als Halbschale ausgebildet ist, die die Seilhülse teilweise umgibt.

8. Seilsäge nach einem der Ansprüche 1 bis 5, dadurch gekennzeichnet, daß der Schneidkopf als Spitzzahn oder Hobelzahn ausgebildet ist, der jeweils auf der Seilhülse aufgesetzt und mit dieser fest verbunden ist.
